# EUROPEAN PATENT APPLICATION

(11) **EP 4 429 327 A1**
(43) Date of publication of application: **11.09.2024**
(21) Application number: 22900366.0
(22) Date of filing: 24.11.2022
(51) Int. Cl.: H04W 36/08

(54) **COMMUNICATION METHOD AND APPARATUS**

(30) Priority: 01.12.2021 CN 202111455273
(71) Applicant: Huawei Technologies Co., Ltd., Shenzhen, Guangdong 518129 (CN)
(72) Inventor: ZHANG, Haisen, Shenzhen, Guangdong 518129 (CN); CHEN, Lei, Shenzhen, Guangdong 518129 (CN)
(74) Representative: Pfenning, Meinig & Partner mbB
(86) International application number: PCT/CN2022/134028
(87) International publication number: WO 2023/098561

(57) **Abstract**

This application provides a communication method and apparatus, to improve performance of a harmonized communication and sensing technology. The method includes: executing a first sensing task; determining that the first sensing task is to be switched; and sending first information to a second network device, where the first information is used for requesting to switch the first sensing task to another network device, and the second network device is configured to manage a plurality of network devices including a first network device. When the first network device that executes a sensing task determines that the sensing task needs to be switched to the another network device, the first information is used for triggering the second network device to select an appropriate network device to execute the sensing task, so that interruption duration of the sensing task can be reduced, continuity of the sensing task can be improved, and performance of harmonized communication and sensing can be improved.

## Description

### CROSS-REFERENCE TO RELATED APPLICATION

This application claims priority to Chinese Patent Application No. 202111455273.1, filed with the China National Intellectual Property Administration on December 1, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of communication, a location, a distance, and other information of a target object may be obtained via a sensing device, for example, a radar or a camera. This technology may be referred to as a sensing technology. The sensing technology may be applied to an emergency system, an automatic driving system, a rail system, and the like. The sensing device, for example, the radar has a small detection distance and low distance resolution. Consequently, the sensing technology cannot support long-distance coverage or high-precision distance resolution. In addition, the sensing device, for example, the radar has high networking costs, and there is no mechanism of synchronization between sensing devices, resulting in severe interference between the sensing devices and a coverage hole. To resolve this problem, a harmonized communication and sensing technology is proposed currently, in other words, a communication base station or the like performs sensing.

When the base station performs sensing on a sensing target, the sensing target may move out of a sensing range of the base station because of mobility of the sensing target, a change of sensing capability information of the base station, and the like. Consequently, a sensing task failure is caused. Therefore, how to improve performance of harmonized communication and sensing is an urgent problem to be resolved.

### SUMMARY

This application provides a communication method and apparatus, to improve performance of a harmonized communication and sensing technology.

According to a first aspect, this application provides a communication method. The method may be applied to a first network device. The first network device may be an access network device, a distribution unit (distributed unit, DU) of the access network device, a transmission reception point (transmission reception point, TRP), an integrated access and backhaul (integrated access and backhaul, IAB) node, or a chip or a circuit. The method includes: executing a first sensing task; determining that the first sensing task is to be switched; and sending first information to a second network device, where the first information is used for requesting to switch the first sensing task to another network device, and the second network device is configured to manage a plurality of network devices including the first network device.

In embodiments of this application, when the first network device that executes the sensing task determines that the sensing task needs to be switched to the another network device, the first information is used for triggering the second network device to select an appropriate network device to execute the sensing task, so that interruption duration of the sensing task can be reduced, continuity of the sensing task can be improved, and performance of harmonized communication and sensing can be improved.

In a possible design, the determining that the first sensing task is to be switched includes: determining that a sensing target of the first sensing task moves, a moving distance of a sensing target of the first sensing task is greater than a threshold, a location that is after movement and that is of the sensing target of the first sensing task is outside a sensing range of the first network device, or a current location of the sensing target of the first sensing task is outside a sensing range of the first network device. According to the foregoing design, it can be determined in a timely manner that the first network device cannot execute the first sensing task, so that the first sensing task can be switched to another network device in a timely manner, thereby ensuring continuity of the first sensing task.

In a possible design, the determining that the first sensing task is to be switched includes: determining that sensing precision of the first network device is less than sensing precision corresponding to the first sensing task, or determining that sensing resolution of the first network device is less than sensing resolution corresponding to the first sensing task. According to the foregoing design, the first network device may switch the first sensing task to another network device in a timely manner when the sensing precision of the first network device cannot meet that of the first sensing task, so that sensing performance of the first sensing task is ensured.

In a possible design, the determining that the first sensing task is to be switched includes: determining that a sensing resource of the first network device is less than a sensing resource corresponding to the first sensing task. According to the foregoing design, the first network device may switch the first sensing task to another network device in a timely manner when the sensing resource of the first network device cannot meet that of the first sensing task, so that the sensing performance of the first sensing task is ensured.

In a possible design, the determining that the first sensing task is to be switched includes: determining that an overlapping or conflicting resource exists between the sensing resource of the first network device and a communication resource of the first network device. According to the foregoing design, the first network device may switch the first sensing task to another network device in a timely manner when the sensing resource of the first network device conflicts with the communication resource, so that the sensing performance of the first sensing task is ensured.

In a possible design, the determining that the first sensing task is to be switched includes: determining that a proportion of the overlapping or conflicting resource between the sensing resource of the first network device and the communication resource of the first network device to the sensing resource is greater than a preset threshold. According to the foregoing design, the first network device may switch the first sensing task to another network device in a timely manner when a large conflict occurs between the sensing resource of the first network device and the communication resource, so that the sensing performance of the first sensing task is ensured.

In a possible design, the determining that the first sensing task is to be switched includes: determining that a quantity of overlapping or conflicting resources between the sensing resource of the first network device and the communication resource of the first network device is greater than a threshold. According to the foregoing design, the first network device may switch the first sensing task to another network device in a timely manner when a large conflict occurs between the sensing resource of the first network device and the communication resource, so that the sensing performance of the first sensing task is ensured.

In a possible design, the determining that the first sensing task is to be switched includes: determining that a data volume that can be currently carried by a first transmission channel is less than a data volume of sensing data, where the first transmission channel is used by the first network device to send data to the second network device. According to the foregoing design, the first network device may switch the first sensing task to another network device in a timely manner when the transmission channel is limited, so that the sensing performance of the first sensing task is ensured.

In a possible design, the first information indicates a reason for switching the first sensing task. The foregoing design helps adjust a sensing configuration of the first sensing task or select an appropriate network device to execute the first sensing task.

In a possible design, the reason for switching the first sensing task may be at least one of the following:
the sensing target of the first sensing task moves, the moving distance of the sensing target of the first sensing task is greater than the threshold, the location that is after movement and that is of the sensing target of the first sensing task is outside the sensing range of the first network device, or the current location of the sensing target of the first sensing task is outside the sensing range of the first network device;
the sensing precision of the first network device is less than the sensing precision corresponding to the first sensing task, or the sensing resolution of the first network device is less than the sensing resolution corresponding to the first sensing task;
the sensing resource of the first network device is less than the sensing resource corresponding to the first sensing task;
the overlapping or conflicting resource exists between the sensing resource of the first network device and the communication resource of the first network device;
the proportion of the overlapping or conflicting resource between the sensing resource of the first network device and the communication resource of the first network device to the sensing resource is greater than the preset threshold;
the quantity of overlapping or conflicting resources between the sensing resource of the first network device and the communication resource of the first network device is greater than the threshold; and
the data volume that can be currently carried by the first transmission channel is less than the data volume of the sensing data, where the first transmission channel is used by the first network device to send the data to the second network device.

In a possible design, the first information carries sensing configuration information of the first network device that executes the first sensing task and/or the sensing data obtained by the first network device. The foregoing design helps the second network device select an appropriate network device to execute the first sensing task.

In a possible design, the method further includes: sending information about the sensing target of the first sensing task to the second network device. The foregoing design helps the third network device execute the first sensing task.

In a possible design, the information about the sensing target of the first sensing task may include at least one of the following: identification information such as an index and an identifier and location information of the sensing target of the first sensing task.

According to a second aspect, this application provides a communication method. The method may be applied to a second network device. The second network device may be a core network device, a central unit (central unit, CU) of the access network device, a donor node, or a chip or a circuit. The second network device is configured to manage a plurality of network devices. The method includes: receiving first information sent by a first network device, where the first information is used for requesting to switch a first sensing task to another network device, and the plurality of network devices include the first network device; determining a third network device configured to execute the first sensing task; and switching the first sensing task to the third network device, where the plurality of network devices include the third network device.

In embodiments of this application, when the first network device that executes the sensing task determines that the sensing task needs to be switched to the another network device, the first information is used for triggering the second network device to select an appropriate network device to execute the sensing task, so that interruption duration of the sensing task can be reduced, continuity of the sensing task can be improved, and performance of harmonized communication and sensing can be improved.

In a possible design, the determining a third network device configured to execute the first sensing task includes: determining the third network device based on at least one of the following: locations of the plurality of network devices, sensing capability information of the plurality of network devices, sensing data obtained by the first network device, information about a sensing target of the first sensing task, and sensing configuration information of the plurality of network devices for executing the first sensing task. The foregoing design helps the second network device select an appropriate network device to execute the first sensing task, so that sensing performance of the first sensing task can be ensured.

In a possible design, a location of any network device in the plurality of network devices is a location of at least one transmission reception point of the network device. The foregoing design helps the second network device select the first sensing task most suitable for executing, so that the sensing performance of the first sensing task is improved.

In a possible design, the method further includes: receiving the sensing data sent by the first network device and/or the information about the sensing target of the first sensing task.

In a possible design, the information about the sensing target of the first sensing task may include at least one of the following: identification information such as an index and an identifier and location information of the sensing target of the first sensing task.

In a possible design, the method further includes: receiving the sensing configuration information of the plurality of network devices for executing the first sensing task and/or the sensing capability information of the plurality of network devices. In the foregoing design, the second network device may select an appropriate network device from the plurality of network devices to indicate the first sensing task, so that the sensing performance of the first sensing task can be improved.

In a possible design, the first information indicates a reason for switching the first sensing task. The foregoing design helps adjust a sensing configuration of the first sensing task or select an appropriate network device to execute the first sensing task.

In a possible design, the reason for switching the first sensing task is at least one of the following:
the sensing target of the first sensing task moves, a moving distance of the sensing target of the first sensing task is greater than a threshold, a location that is after movement and that is of the sensing target of the first sensing task is outside a sensing range of the first network device, or a current location of the sensing target of the first sensing task is outside a sensing range of the first network device;
sensing precision of the first network device is less than sensing precision corresponding to the first sensing task, or sensing resolution of the first network device is less than sensing resolution corresponding to the first sensing task;
a sensing resource of the first network device is less than a sensing resource corresponding to the first sensing task;
an overlapping or conflicting resource exists between the sensing resource of the first network device and a communication resource of the first network device;
a proportion of the overlapping or conflicting resource between the sensing resource of the first network device and the communication resource of the first network device to the sensing resource is greater than a preset threshold;
a quantity of overlapping or conflicting resources between the sensing resource of the first network device and the communication resource of the first network device is greater than a threshold; and
a data volume that can be currently carried by a first transmission channel is less than a data volume of the sensing data, where the first transmission channel is used by the first network device to send data to the second network device.

In a possible design, the first information carries sensing configuration information of the first network device that executes the first sensing task and/or the sensing data obtained by the first network device. The foregoing design helps the third network device execute the first sensing task.

According to a third aspect, this application provides a communication method. The method may be applied to a first network device. The first network device may be an access network device, a DU, a TRP, or an IAB node of the access network device, or a chip or a circuit. The method includes: executing a first sensing task; determining that the first sensing task is to be switched; determining a third network device configured to execute the first sensing task; and sending second information to the third network device, where the second information is used for requesting the third network device to execute the first sensing task.

In embodiments of this application, when determining that the sensing task needs to be switched to another network device, the first network device executing the sensing task switches the first sensing task to the another network device in a timely manner, so that interruption duration of the sensing task can be reduced, continuity of the sensing task can be improved, and performance of harmonized communication and sensing can be improved.

In a possible design, the determining that the first sensing task is to be switched includes: determining that a sensing target of the first sensing task moves, a moving distance of a sensing target of the first sensing task is greater than a threshold, a location that is after movement and that is of the sensing target of the first sensing task is outside a sensing range of the first network device, or a current location of the sensing target of the first sensing task is outside a sensing range of the first network device. According to the foregoing design, it can be determined in a timely manner that the first network device cannot execute the first sensing task, so that the first sensing task can be switched to another network device in a timely manner, thereby ensuring continuity of the first sensing task.

In a possible design, the determining that the first sensing task is to be switched includes: determining that sensing precision of the first network device is less than sensing precision corresponding to the first sensing task, or determining that sensing resolution of the first network device is less than sensing resolution corresponding to the first sensing task. According to the foregoing design, the first network device may switch the first sensing task to another network device in a timely manner when the sensing precision of the first network device cannot meet that of the first sensing task, so that sensing performance of the first sensing task is ensured.

In a possible design, the determining that the first sensing task is to be switched includes: determining that a sensing resource of the first network device is less than a sensing resource corresponding to the first sensing task. According to the foregoing design, the first network device may switch the first sensing task to another network device in a timely manner when the sensing resource of the first network device cannot meet that of the first sensing task, so that the sensing performance of the first sensing task is ensured.

In a possible design, the determining that the first sensing task is to be switched includes: determining that an overlapping or conflicting resource exists between a sensing resource of the first network device and a communication resource of the first network device. According to the foregoing design, the first network device may switch the first sensing task to another network device in a timely manner when the sensing resource of the first network device conflicts with the communication resource, so that the sensing performance of the first sensing task is ensured.

In a possible design, the determining that the first sensing task is to be switched includes: determining that a proportion of an overlapping or conflicting resource between a sensing resource of the first network device and a communication resource of the first network device to the sensing resource is greater than a preset threshold. According to the foregoing design, the first network device may switch the first sensing task to another network device in a timely manner when a large conflict occurs between the sensing resource of the first network device and the communication resource, so that the sensing performance of the first sensing task is ensured.

In a possible design, the determining that the first sensing task is to be switched includes: determining that a quantity of overlapping or conflicting resources between a sensing resource of the first network device and a communication resource of the first network device is greater than a threshold. According to the foregoing design, the first network device may switch the first sensing task to another network device in a timely manner when a large conflict occurs between the sensing resource of the first network device and the communication resource, so that the sensing performance of the first sensing task is ensured.

In a possible design, the determining that the first sensing task is to be switched includes: determining that a data volume that can be currently carried by a first transmission channel is less than a data volume of sensing data, where the first transmission channel is used by the first network device to send data to a second network device. According to the foregoing design, the first network device may switch the first sensing task to another network device in a timely manner when the transmission channel is limited, so that the sensing performance of the first sensing task is ensured.

In a possible design, the determining a third network device configured to execute the first sensing task includes: determining the third network device based on at least one of the following: the sensing data, information about the sensing target of the first sensing task, a location of at least one network device, sensing configuration information of the at least one network device for executing the first sensing task, and sensing capability information of the at least one network device, where the at least one network device includes the third network device. The foregoing design helps the first network device select an appropriate network device to execute the first sensing task, so that the sensing performance of the first sensing task can be ensured.

In a possible design, a location of any network device in the at least one network device is a location of at least one transmission reception point of the network device. The foregoing design helps the first network device select a device most suitable for executing the first sensing task, so that the sensing performance of the first sensing task is improved.

In a possible design, the information about the sensing target of the first sensing task includes at least one of the following: identification information such as an index and an identifier and location information of the sensing target of the first sensing task.

In a possible design, before the determining a third network device configured to execute the first sensing task, the method further includes: receiving the sensing configuration information of the at least one network device for executing the first sensing task and/or the sensing capability information of the at least one network device. In the foregoing design, the first network device may obtain sensing capability information or sensing configuration of another network device, to help select an appropriate network device to execute the first sensing task.

In a possible design, the second information includes at least one of the following: sensing configuration information of the first network device that executes the first sensing task, the information about the sensing target of the first sensing task, a sensing result reporting manner of the first sensing task, identification information, for example, an identifier or index, of a target for receiving the sensing data, and the sensing data obtained by the first network device. The foregoing design helps the third network device execute the first sensing task.

In a possible design, the information about the sensing target of the first sensing task may include at least one of the following: the identification information such as the index and the identifier and the location information of the sensing target of the first sensing task.

According to a fourth aspect, this application further provides a communication apparatus. The apparatus is applicable to an access network device, or a DU, a TRP, or an IAB node of an access network device. The communication apparatus has a function of implementing any method provided in the first aspect or the third aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the access network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support the communication apparatus in communicating with a second network device or a third network device.

For example, the communication apparatus has a function of implementing the method provided in the first aspect, and the processor may be configured to: execute a first sensing task; determine that the first sensing task is to be switched; and send first information to a second network device via the interface circuit.

For another example, the communication apparatus has a function of implementing the method provided in the third aspect, and the processor may be configured to: execute the first sensing task; determine that the first sensing task is to be switched; determine the third network device configured to execute the first sensing task; and send second information to a third network device via the interface circuit.

In a possible design, the communication apparatus includes corresponding function modules, which are respectively configured to implement the steps in the foregoing method. The function may be implemented by hardware, or may be implemented by hardware executing corresponding software. The hardware or the software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the third aspect. Details are not described herein again.

For example, the communication apparatus has a function of implementing the method provided in the first aspect, and the processing unit may be configured to: execute a first sensing task; determine that the first sensing task is to be switched; and send first information to a second network device via the communication unit.

For another example, the communication apparatus has a function of implementing the method provided in the third aspect, and the processing unit may be configured to: execute the first sensing task; determine to switch the first sensing task; determine a third network device configured to execute the first sensing task; and send second information to the third network device via the communication unit.

According to a fifth aspect, this application further provides a communication apparatus. The apparatus is applicable to a core network device, a CU of an access network device, or a donor node. The communication apparatus has a function of implementing any method provided in the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the access network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and a device, for example, a first network device.

For example, the communication apparatus has a function of implementing the method provided in the second aspect, and the processor may be configured to: receive, via the interface circuit, first information sent by the first network device, where the first information is used for requesting to switch a first sensing task to another network device; determine a third network device configured to execute the first sensing task; and switch the first sensing task to the third network device.

In a possible design, the communication apparatus includes corresponding function modules, which are respectively configured to implement the steps in the foregoing method. The function may be implemented by hardware, or may be implemented by hardware executing corresponding software. The hardware or the software includes one or more modules corresponding to the foregoing functions.

In a possible design, a structure of the communication apparatus includes a processing unit (or a processing module) and a communication unit (or a communication module). These units may perform corresponding functions in the foregoing method example. For details, refer to the descriptions in the method provided in the second aspect. Details are not described herein again.

For example, the communication apparatus has a function of implementing the method provided in the second aspect, and the processing unit may be configured to: receive, via the communication unit, first information sent by a first network device, where the first information is used for requesting to switch a first sensing task to another network device; determine a third network device configured to execute the first sensing task; and switch the first sensing task to the third network device.

According to a sixth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in the first aspect or the third aspect, and any possible design by using a logic circuit or executing code instructions.

According to a seventh aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in the second aspect, and any possible design by using a logic circuit or executing code instructions.

According to an eighth aspect, a computer-readable storage medium is provided. The computer-readable storage medium stores a computer program or instructions. When the computer program or the instructions are executed by a processor, the method in any one of the first aspect to the third aspect and any possible design is implemented.

According to a ninth aspect, a computer program product storing instructions is provided. When the instructions are run by a processor, the method in any one of the first aspect to the third aspect and any possible design is implemented.

According to a tenth aspect, a chip system is provided. The chip system includes a processor, and may further include a memory, configured to implement the method in any one of the first aspect to the third aspect and any possible design. The chip system may include a chip, or may include the chip and another discrete device.

According to an eleventh aspect, a communication system is provided, where the system includes the apparatus (for example, the first network device) according to the first aspect and the apparatus (for example, the second network device) according to the second aspect.

According to a twelfth aspect, a communication system is provided, where the system includes the apparatus (for example, the first network device) according to the third aspect and a third network device.

### BRIEF DESCRIPTION OF DRAWINGS

FIG. 1 is a schematic flowchart of a harmonized communication and sensing technology according to an embodiment of this application;
FIG. 2 is a diagram of harmonized communication and sensing according to an embodiment of this application;
FIG. 3 is a diagram of an architecture of a communication system according to an embodiment of this application;
FIG. 4 is a schematic flowchart of a communication method according to an embodiment of this application;
FIG. 5 is a diagram of single-beam directional scanning according to an embodiment of this application;
FIG. 6 is a diagram of multi-beam omnidirectional scanning according to an embodiment of this application;
FIG. 7 is a diagram of beam tracking according to an embodiment of this application;
FIG. 8 is a schematic flowchart of a communication method according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.
(1) Sensing: The sensing means detecting a parameter of a physical environment, such as speed testing and target positioning. This may be understood as that an object detection system detects a target by transmitting an electromagnetic wave and analyzing an echo signal reflected by an object.

The sensing may also be referred to as detection.

(2) Sensing signal: The sensing signal is a signal for sensing (or detecting) a sensed target (or referred to as a target object). The sensing signal is also referred to as a detection signal, a linear frequency modulation signal, a radar signal, a radar sensing signal, a radar detection signal, an environment sensing signal, or the like. The sensing signal may be a pulse signal, or may be a possible signal in a wireless communication system, for example, an orthogonal frequency division multiplexing (orthogonal frequency division multiplexing, OFDM) signal. Compared with the sensing signal, a signal communicated between a network device and a terminal device may be considered as a communication signal, for example, a signal carried on a physical downlink shared channel (physical downlink shared channel, PDSCH).

(3) Echo signal: The echo signal is a signal that is reflected to a receiver after a sensing signal is transmitted from a transmitter to a target object. Autocorrelation processing is performed on the echo signal and the sensing signal, and then a delay of the echo signal relative to the sensing signal in time domain may be obtained through analysis by performing conversion, so that a distance of a sensing target to a transmit source can be reflected. By comparing different transmitted signals with echo signals reflected by a same target, the echo signals may be converted into a Doppler domain. A distance and a speed of the sensing target may be obtained through analysis by combining the Doppler domain and a distance domain. In addition, a direction of the sensing target relative to the transmit source may be obtained based on a beam direction of an antenna that transmits the sensing signal.

(4) Harmonized communication and sensing (harmonized communication and sensing, HCS): The harmonized communication and sensing may be understood as that communication and sensing functions are combined, so that a communication system has both the communication and sensing functions. To be specific, the communication system supports information transmission on a wireless channel, and also supports sensing of a physical feature of an ambient environment by actively recognizing and analyzing a channel characteristic, to implement mutual enhancement of the communication and sensing functions. In the harmonized communication and sensing technology, a sensing device may send a sensing signal, and receive a signal (also referred to as an echo signal) that is reflected by a sensed target and that is of the sent sensing signal, to determine attribute information of the sensed target, for example, information such as a speed, distance, shape, and size of the sensed target. The sensed target may be a fixed object, for example, a mountain, a forest, or a building, or may be a movable object, for example, a vehicle, a drone, a pedestrian, or a terminal device. The sensing device may also be referred to as a sensing apparatus, or may be referred to as a detector or the like, or may be referred to as a communication device (such as a terminal device or an access network device) having a sensing function. The sensing function may include at least a capability of sending a sensing signal and receiving an echo signal of the sensing signal.

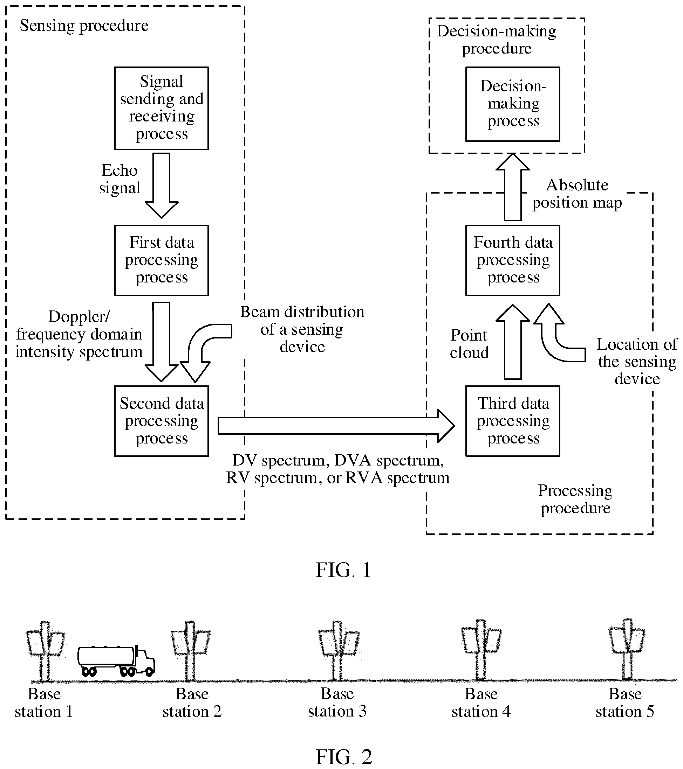

As shown in FIG. 1, a harmonized communication and sensing process may include a signal sending and receiving process, a first data processing process, a second data processing process, a third data processing process, a fourth data processing process, and a decision making process.

The signal sending and receiving process may include sending a sensing signal and receiving an echo signal of the sensing signal.

The first data processing process may include processing the echo signal to obtain a range/Doppler spectrum or a range/Doppler/angle spectrum.

The second data processing process may include processing a range/Doppler spectrum or a range/Doppler/angle spectrum to obtain a distance/velocity (distance/velocity, DV) spectrum, a distance/velocity/angle (distance/velocity/angle, DVA) spectrum, a range/velocity (range/velocity, RV) spectrum, or a range/velocity/angle (range/velocity/angle, RVA) spectrum. In the second data processing process, the range/Doppler spectrum or the range/Doppler/angle spectrum may be processed based on beam distribution of a sensing device.

The third data processing process may be processing the DV spectrum, the DVA spectrum, the RV spectrum, or the RVA spectrum to obtain a point cloud, where the point cloud includes a plurality of data points, and each data point represents a relative location relative to the sensing device. The point cloud may be understood as a location map in a relative coordinate system, and the relative coordinate system may be related to a location of the sensing device.

The fourth data processing process may be processing the point cloud to obtain an absolute position map. The absolute position map may be understood as a position diagram in an absolute coordinate system. The absolute coordinate system may be a longitude and latitude coordinate system or the like. Alternatively, the absolute coordinate system is a preset relative coordinate system based on a reference point. In the fourth data processing process, the point cloud may be processed based on the location of the sensing device.

The decision making process may be processing the absolute position map, for example, based on a sensing result through a clustering algorithm, track detection, association, and the like, to obtain a specific feature or category of a sensing target through analysis.

It should be understood that the sensing procedure, the processing procedure, and the decision-making procedure in FIG. 1 are merely example division. In a specific embodiment, two procedures, four procedures, or the like may be obtained through division. This is not specifically limited herein. In addition, a process included in each procedure is also an example. In a specific embodiment, the second data processing process and the third data processing process may alternatively belong to the processing procedure. In this embodiment, the sensing procedure includes the signal sending and receiving process and the first data processing process. Alternatively, the third data processing process and the fourth data processing process may belong to the sensing procedure. It may be understood that, when both the third data processing process and the fourth data processing process belong to the sensing procedure, the harmonized communication and sensing process may not include the processing procedure.

(5) Resource: The resource includes a time domain resource, a frequency domain resource, a space domain resource, and a code domain resource, and may be considered as a resource pair formed by the time domain resource, the frequency domain resource, the space domain resource, and the code domain resource. The time domain resource is an OFDM symbol occupied in time domain. A minimum granularity of the time domain resource is not limited in embodiments of this application. For example, the minimum granularity of the time domain resource is one OFDM symbol, or may be a mini-slot (mini-slot), a slot (slot), or the like. One mini-slot may include two or more OFDM symbols, and one slot includes 14 OFDM symbols.

The frequency domain resource is a frequency resource occupied in frequency domain. A minimum granularity of the frequency domain resource may be one subcarrier or a resource element (resource element, RE), or may be a physical resource block (physical resource block, PRB), a resource block group (resource block group, RBG), or the like. One PRB includes 12 REs in frequency domain, and one RBG may include two PRBs, four PRBs, eight PRBs, or 16 PRBs.

The space domain resource may also be referred to as a beam, and the beam may be classified into a transmit beam and a receive beam. The transmit beam means signal strength distribution formed in different directions in space after a signal is transmitted by an antenna. The receive beam means signal strength distribution, in different directions in space, of a signal received from an antenna. One beam may include one or more antenna ports. Different beams may be considered as different resources.

The code domain resource may also be a sequence or symbol resource used for sensing, for example, a ZC (Zadoff-Chu) sequence. The code domain resource used for sensing may be different from a code domain resource used for communication, or may be the same as a code domain resource used for sensing. This is not specifically limited.

(6) IAB node and donor node: The IAB node is a specific name of a relay node, and may be one of an access network device or a terminal device having a forwarding function, or may be an independent device form. For example, the IAB node in this application may also be referred to as a relay node (relay node, RN), a relay transmission reception point (transmission reception point, TRP), a relaying transmission reception point (relaying TRP), or the like. The donor node is an access network device, and may provide a network service for the terminal device via the IAB node.

(7) A sensing resource may be a resource used for sensing.

(8) A communication resource may be a resource used for communication.

In embodiments of this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first network device and a second network device are merely used to distinguish between different devices, but do not indicate different priorities, importance degrees, or the like of the two devices.

The foregoing describes some noun concepts used in embodiments of this application. The following describes technical features of embodiments of this application.

With development of communication, a location, a distance, and other information of a target object may be obtained via a sensing device, for example, a radar or a camera. This technology may be referred to as a sensing technology. The sensing technology may be applied to an emergency system, an automatic driving system, a rail system, and the like. The sensing device, for example, the radar has a small detection distance and low distance resolution. Consequently, the sensing technology cannot support long-distance coverage or high-precision distance resolution. In addition, the sensing device, for example, the radar has high networking costs, and there is no mechanism of synchronization between sensing devices, resulting in severe interference between the sensing devices and a coverage hole. To resolve this problem, a harmonized communication and sensing technology is proposed currently, in other words, a base station or the like performs sensing.

When the base station performs sensing on a sensing target, the sensing target may move out of a sensing range of the base station because of mobility of the sensing target, a change of sensing capability information of the base station, and the like. Consequently, a sensing task failure is caused. For example, as shown in FIG. 2, five base stations are deployed at an interval along a road, and are base stations 1 to 5 from left to right. A vehicle travels on the road. When the vehicle travels to a sensing range of the base station 1, the base station 1 provides a sensing service for the vehicle. The vehicle continues to travel rightwards, and the base station 2 provides the sensing service for the vehicle. The rest may be deduced by analogy.

Therefore, how to improve performance of harmonized communication and sensing is an urgent problem to be resolved.

Based on this, embodiments of this application provide a communication method and apparatus, to improve the performance of harmonized communication and sensing. The method and the apparatus are based on a same technical concept. Because problem-resolving principles of the method and the apparatus are similar, mutual reference may be made to implementations of the apparatus and the method, and repeated descriptions are not described again.

The communication method provided in this application may be applied to various communication systems. For example, the communication system may be the internet of things (internet of things, IoT), the narrowband internet of things (narrowband internet of things, NB-IoT), or long term evolution (long term evolution, LTE), or may be a 5^{th} generation (5^{th} generation, 5G) communication system, or may be an LTE and 5G hybrid architecture, or may be a new communication system in 6G or future communication development. Alternatively, the communication system may be a machine to machine (machine to machine, M2M) network, machine type communication (machine type communication, MTC), or another network.

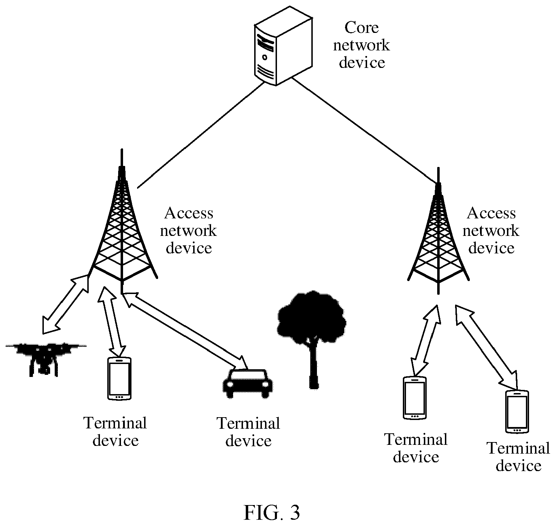

For example, FIG. 3 is a diagram of an architecture of a communication system to which an embodiment of this application is applicable. The system shown in FIG. 3 includes a core network device, an access network device, and a terminal device.

The foregoing terminal device may be an entity configured to receive or transmit a signal on a user side, and may also be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in video surveillance, a wearable terminal device, customer-premises equipment (customer-premises equipment, CPE), or the like.

Optionally, the terminal device may also be used as a sensing device. For example, the terminal device may have a sensing function, or a sensing device having a sensing function is installed in the terminal device.

In embodiments of this application, an apparatus configured to implement a function of a terminal device may be a terminal device, or may be an apparatus, for example, a chip system, that can support the terminal device in implementing the function, and the apparatus may be installed in the terminal device. In this embodiment of this application, the chip system may include a chip, or may include a chip and another discrete device. In the technical solutions provided in embodiments of this application, an example in which the apparatus configured to implement the function of the terminal is the terminal device is for describing the technical solutions provided in embodiments of this application.

The access network device may be an entity configured to transmit or receive a signal on a network side, for example, a device that communicates with a wireless terminal device over an air interface in an access network by using one or more cells. The access network device may be a next generation NodeB (next Generation NodeB, gNB) in an NR system, or may be an evolved NodeB (evolved NodeB, eNB) in an LTE system, or the like. In embodiments of this application, an apparatus configured to implement a function of an access network device may be an access network device, or may be an apparatus, for example, a chip system, that can support the access network device in implementing the function, and the apparatus may be installed in the access network device. In the technical solutions provided in embodiments of this application, an example in which the apparatus configured to implement a function of an access network device is an access network device is used to describe the technical solutions provided in embodiments of this application.

Optionally, the access network device may also be used as a sensing device. For example, the access network device may have a sensing function, or a sensing device having a sensing function is installed in the access network device.

The core network device may be a general term of a plurality of function entities used for user management, data transmission, and access network device configuration on the network side, and includes an access and mobility management function (access and mobility management function, AMF), a user plane function (user plane function, UPF), a session management function (session management function, SMF), and the like. In embodiments of this application, an apparatus configured to implement a function of a core network device may be a core network device, or may be an apparatus, for example, a chip system, that can support the core network device in implementing the function, and the apparatus may be installed in the core network device. In the technical solutions provided in embodiments of this application, an example in which the apparatus configured to implement a function of a core network device is a core network device is used to describe the technical solutions provided in embodiments of this application.

A network architecture described in embodiments of this application is intended to describe the technical solutions in embodiments of this application more clearly, and does not constitute a limitation on the technical solutions provided in embodiments of this application. A person of ordinary skill in the art may learn that, with evolution of the network architecture, the technical solutions provided in embodiments of this application are also applicable to similar technical problems.

The following describes the technical solutions in embodiments of this application with reference to the accompanying drawings in embodiments of this application.

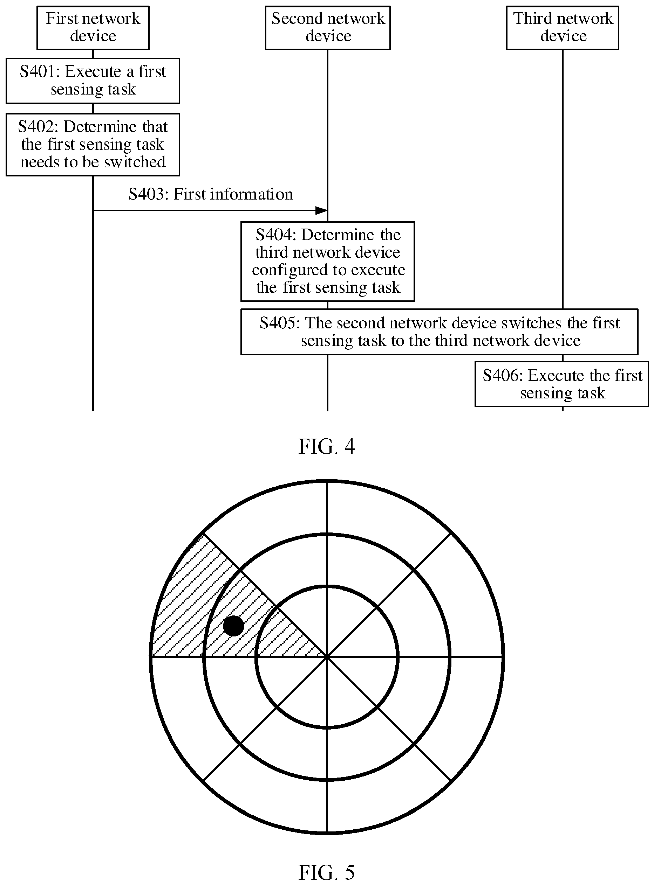

FIG. 4 is a schematic flowchart of a communication method according to this application. The method includes the following steps.

S401: A first network device executes a first sensing task.

For example, the first network device may be an access network device, a CU of the access network device, a DU of the access network device, or an IAB node. A second network device in the following may be a core network device, a donor node, or the like. A third network device in the following may be an access network device, a CU of the access network device, a DU of the access network device, or an IAB node.

Optionally, before the first network device executes the first sensing task, the first network device receives a sensing request and/or sensing configuration information for executing the first sensing task. The sensing request and/or the sensing configuration information for executing the first sensing task may be from the second network device. Alternatively, the sensing request and/or the sensing configuration information may be from another network device, which is not specifically limited herein.

The sensing request may be used for requesting the first network device to perform a sensing operation. The sensing operation may be understood as the sensing procedure in the foregoing term introduction (4), and may include at least the signal sending and receiving process in the foregoing term introduction (4). The sensing operation (or the sensing procedure) may further include the first data processing process, the second data processing process, the third data processing process, and the like.

Alternatively, the sensing request may be used for requesting a sensing result, and a first sensing result requested by using the sensing request may be a result of the sensing procedure in the foregoing term introduction (4). For example, if the sensing procedure includes the signal sending and receiving process and the first data processing process, the sensing result requested by using the sensing request may be a result of the first data processing process, namely, a range/Doppler spectrum or a range/frequency domain/angle spectrum. For another example, if the sensing procedure includes the signal sending and receiving process, the sensing result requested by using the sensing request may be an echo signal.

Alternatively, the sensing request may be used for triggering the first network device to perform sensing. For example, the sensing request is used for triggering the first network device to perform the signal sending and receiving process in the foregoing term introduction (4).

For example, the sensing request carries at least one of the following: a sensing data type, the sensing configuration information for executing the first sensing task, network device identification information, a sensing requirement, and a sensing service identifier. It should be noted that the foregoing information may be sent to the first network device by using one message (for example, the sensing request), or may be sent to the first network device by using a plurality of messages, where for example, one message may carry a subset of the foregoing information.

The sensing data type may be one of the following types: an echo signal; a range/Doppler spectrum or a range/Doppler/angle spectrum; a DV spectrum, an RV spectrum, a DVA spectrum, or an RVA spectrum; and a point cloud including a plurality of data points, where each data point indicates a relative location relative to the first access network device or an absolute location. The sensing data type may also be described as a sensing data format. It should be understood that the range/Doppler spectrum may be replaced with another data type reflecting a distance, the range/Doppler/angle spectrum may be replaced with another data type reflecting a distance and an angle, the DV spectrum and the RV spectrum may be replaced with other data types reflecting a distance and a velocity, and the DVA spectrum and the RVA spectrum may be replaced with other data types reflecting a distance, a velocity, and an angle. In addition, a name of the data type is not specifically limited in embodiments of this application. For example, the range/Doppler spectrum may also be referred to as a range/Doppler map, a range/Doppler table, or the like.

The sensing configuration information for executing the first sensing task may be used for configuring at least one of the following: a sensing resource for executing the first sensing task, a sensing manner for executing the first sensing task, and a result reporting manner for executing the first sensing task. The sensing resource may include a time domain resource, a frequency domain resource, a space domain resource, a code domain resource, and the like. The sensing manner may be periodic scanning, omnidirectional scanning, or directional scanning. The result reporting manner is periodic reporting or event-triggered reporting.

The network device identification information may include identifiers of M network devices, the M network devices include the first network device, and M is an integer greater than 0. In an implementation, the network device identification information may also be replaced with area information of a sensing service, where the first network device is located in an area of the sensing service.

The sensing requirement may include service precision (or service resolution), geographical location information, beam direction information, a scanning periodicity, sensing time, and a quantity of sampling points.

In an example description, that "a first network device executes a first sensing task" may be understood as that the first network device performs sensing on a sensing target.

S402: The first network device determines that the first sensing task is to be switched.

For example, step S402 may also be described as follows: The first network device determines that the first sensing task is to be switched to another network device.

The following describes six specific implementations of determining that the first sensing task is to be switched.

Implementation 1: The first network device may determine, when the sensing target of the first sensing task moves, a moving distance of the sensing target of the first sensing task is greater than a threshold, a location that is after movement and that is of the sensing target of the first sensing task is outside a sensing range of the first network device, or a current location of the sensing target of the first sensing task is outside a sensing range of the first network device.

Implementation 2: The first network device may determine, when sensing precision (or sensing resolution) of the first network device is less than sensing precision (or sensing resolution) corresponding to the first sensing task, that the first sensing task is to be switched. For example, service precision of the first network device may be at a level of 5 meters, 1 meter, 50 centimeters, 10 centimeters, or the like.

Implementation 3: The first network device may determine, when a sensing resource of the first network device is less than the sensing resource corresponding to the first sensing task, that the first sensing task is to be switched.

Implementation 4: The first network device may determine that the first sensing task is to be switched when an overlapping or conflicting resource exists between the sensing resource of the first network device and a communication resource of the first network device.

For example, that "an overlapping or conflicting resource exists between the sensing resource of the first network device and a communication resource of the first network device" may be understood as: The sensing resource of the first network device and the communication resource of the first network device overlap or conflict with each other in at least one of the following: overlapping in frequency domain, overlapping in time domain, and overlapping in code domain.

Implementation 5: The first network device may determine that the first sensing task is to be switched when the overlapping or conflicting resource between the sensing resource of the first network device and the communication resource of the first network device is greater than a threshold.

Implementation 6: The first network device may determine that the first sensing task is to be switched when a proportion of the overlapping or conflicting resource between the sensing resource of the first network device and the communication resource of the first network device to the sensing resource is greater than a preset threshold.

In the foregoing implementation 3 to implementation 6, the sensing resource of the first network device may be all sensing resources of the first network device, or may be a sensing resource allocated to the first sensing task.

Implementation 7: The first network device may determine that the first sensing task is to be switched when a data volume currently carried by a first transmission channel is less than a data volume of sensing data, where the first transmission channel is used by the first network device to send data to the second network device.

It should be noted that the foregoing seven implementations may be implemented separately, or may be implemented in combination. This is not specifically limited herein.

S403: The first network device sends first information to the second network device. Correspondingly, the second network device receives the first information.

The first information is used for requesting to switch the first sensing task to another network device, and the second network device is configured to manage a plurality of network devices including the first network device and the third network device described below. A type of the third network device may be the same as that of the first network device. For example, the first network device is an access network device, and the third network device is also an access network device. For another example, the first network device is an IAB node, and the third network device may also be an IAB node.

Alternatively, a type of the third network device may be different from that of the first network device. For example, the first network device is an access network device, and the third network device is a DU or a TRP of the access network device. For another example, the first network device is an IAB node, and the third network device may also be a DU or a TRP of the IAB node. For another example, the first network device is a DU of an access network device, and the third network device is the access network device. For still another example, the first network device is an access network device, and the third network device is an IAB node.

Optionally, the first information may further indicate a reason for switching the first sensing task. The first information may further carry sensing configuration information of the first network device and/or the sensing data obtained by the first network device.

For example, corresponding to the foregoing implementation 1, a reason for switching the first sensing task may be that the sensing target of the first sensing task moves, the moving distance of the sensing target of the first sensing task is greater than the threshold, the location that is after movement and that is of the sensing target of the first sensing task is outside the sensing range of the first network device, or the current location of the sensing target of the first sensing task is outside the sensing range of the first network device.

Corresponding to the foregoing implementation 2, a reason for switching the first sensing task may be that the sensing precision of the first network device is less than the sensing precision corresponding to the first sensing task, or the sensing resolution of the first network device is less than the sensing resolution corresponding to the first sensing task.

Corresponding to the foregoing implementation 3, a reason for switching the first sensing task may be that the sensing resource of the first network device is less than the sensing resource corresponding to the first sensing task.

Corresponding to the foregoing implementation 4, a reason for switching the first sensing task may be that the overlapping or conflicting resource exists between the sensing resource of the first network device and the communication resource of the first network device.

Corresponding to the foregoing implementation 5, a reason for switching the first sensing task may be that the quantity of overlapping or conflicting resources between the sensing resource of the first network device and the communication resource of the first network device is greater than the threshold.

Corresponding to the foregoing implementation 6, a reason for switching the first sensing task may be that the proportion of the overlapping or conflicting resource between the sensing resource of the first network device and the communication resource of the first network device to the sensing resource is greater than the preset threshold.

Corresponding to the foregoing implementation 7, a reason for switching the first sensing task may be that the data volume that can be currently carried by the first transmission channel is less than the data volume of the sensing data, where the first transmission channel is used by the first network device to send the data to the second network device.

In a possible implementation, the first network device may further send information about the sensing target of the first sensing task to the second network device.

For example, the information about the sensing target of the first sensing task may include at least one of the following: identification information such as an index and an identifier and location information of the sensing target of the first sensing task.

S404: The second network device determines the third network device configured to execute the first sensing task.

In a possible implementation, the second network device may determine the third network device based on at least one of the following: locations of a plurality of managed network devices, sensing capability information of the plurality of managed network devices, the sensing data obtained by the first network device, the information about the sensing target of the first sensing task, and the sensing configuration information of the plurality of network devices for executing the first sensing task.

In an example, the location of the network device may be a location of at least one TRP of the network device.

The second network device may obtain the location information of the sensing target in any one of the following three manners.

Manner 1: The second network device may obtain the location information of the sensing target from the third information.

Manner 2: The second network device may determine a location of the sensing target based on a tracking loss location of the sensing target reported by the first network device.

Manner 3: The second network device may alternatively determine a location of the sensing target based on a sensing mode of the first network device. The sensing mode may include the following three types: single-beam directional scanning, multi-beam omnidirectional scanning, and beam tracking.

Single-beam directional scanning: A network device in the sensing mode supports only unidirectional detection, and a scanning direction is fixed. Optionally, sensing data obtained through the single beam directional scanning may be an RD spectrum, as shown in FIG. 5.

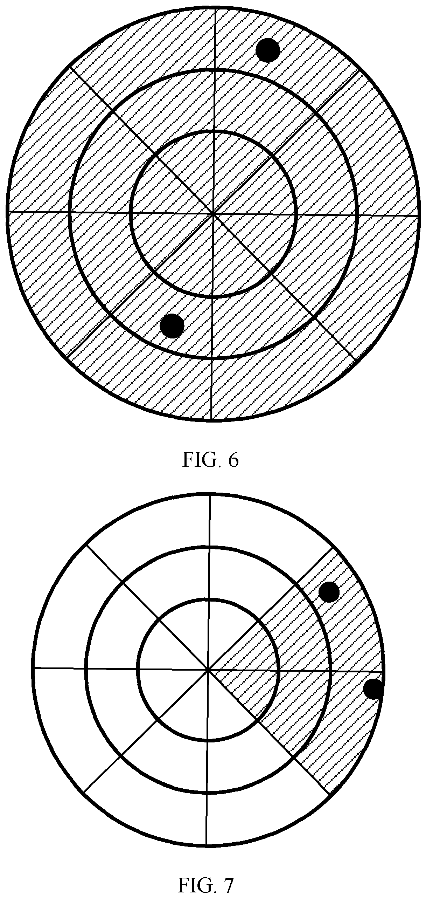

Multi-beam omnidirectional scanning: A network device in the sensing mode supports multi-direction detection, for example, detection is performed in all beam directions through a plurality of antennas. The multi-beam omnidirectional scanning may support processing of an angle domain-sensing result. Optionally, sensing data obtained through the multi-beam omnidirectional scanning may be a DVA spectrum, as shown in FIG. 6.

Beam tracking: A network device in the sensing mode may flexibly adjust a beam direction, and detect a direction of the sensing target. The network device in the sensing mode may determine in a timely manner whether the sensing target is within a sensing range, as shown in FIG. 7.

In the foregoing implementation, the sensing configuration information of the plurality of network devices for executing the first sensing task may be obtained by the second network device from the plurality of network devices.

The sensing capability information of the plurality of network devices may be determined by the second network device based on sensing capability information obtained from the plurality of network devices. Sensing capability information of a network device indicates the sensing capability information of the network device.

S405: The second network device switches the first sensing task to the third network device.

In an implementation, the second network device may send a request message to the third network device, where the request message is used for requesting to switch the first sensing task to the third network device, or request the third network device to execute the first sensing task.

Optionally, the request message may carry a part or all of configuration information of the first sensing task executed by the first network device. It should be understood that, if the request message carries a part of sensing configuration information of the first network device, the other part of the sensing configuration information may be sent to the third network device through other signaling or information. For example, the second network device may send, before step S401, the other part of sensing configuration information to a plurality of network devices managed by the second network device.

The request message may further carry the information about the sensing target and/or the sensing data of the first network device. The information about the sensing target may include at least one of the following: the identification information of the sensing target, for example, the identifier or the index, and the location information of the sensing target.

The request message may further carry an identifier of the core network device that reports a sensing result.

Optionally, after switching the first sensing task to the third network device, the second network device may update an identifier of a routing node, for example, may update the routing node executing the first sensing task from an identifier of the first network device to an identifier of the third network device.

S406: The third network device executes the first sensing task.

In embodiments of this application, when the first network device that executes the sensing task determines that the sensing task needs to be switched to the another network device, the first information is used for triggering the second network device to select an appropriate network device to execute the sensing task, so that interruption duration of the sensing task can be reduced, continuity of the sensing task can be improved, and performance of harmonized communication and sensing can be improved.

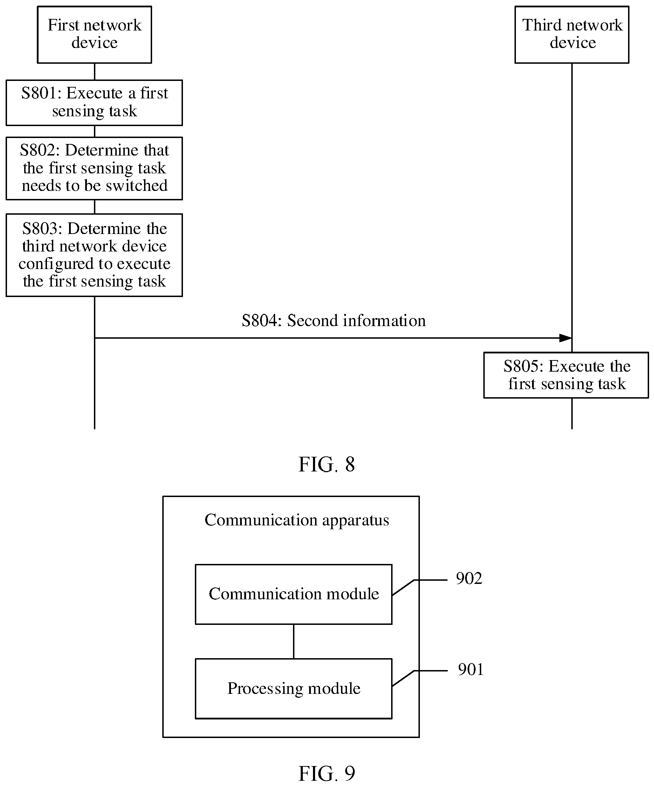

FIG. 8 is a schematic flowchart of a communication method according to this application. The method includes the following steps.

S801: A first network device executes a first sensing task.

For example, the first network device may be an access network device, a CU of the access network device, a DU of the access network device, or an IAB node. A second network device in the following may be a core network device, a donor node, or the like. A third network device in the following may be an access network device, a CU of the access network device, a DU of the access network device, or an IAB node.

Optionally, before the first network device executes the first sensing task, the first network device receives a sensing request and/or sensing configuration information. The sensing request and/or the sensing configuration information may be from the second network device. Alternatively, the sensing request and/or the sensing configuration information may be from another network device, which is not specifically limited herein. For the sensing request and the sensing configuration information, refer to related descriptions in the method in FIG. 4. Details are not described herein again.

S802: The first network device determines that the first sensing task is to be switched.

For S802, refer to related descriptions of S402. Details are not described herein again.

S803: The first network device determines the third network device configured to execute the first sensing task.

In a possible implementation, the first network device may determine the third network device based on at least one of the following: a location of at least one network device, sensing capability information of the at least one network device, sensing data obtained by the first network device, information about a sensing target of the first sensing task, and sensing configuration information of the at least one network device for executing the first sensing task, where the at least one network device includes the third network device.

A type of the third network device may be the same as that of the first network device. For example, the first network device is an access network device, and the third network device is also an access network device. For another example, the first network device is an IAB node, and the third network device may also be an IAB node.

Alternatively, a type of the third network device may be different from that of the first network device. For example, the first network device is an access network device, and the third network device is a DU or a TRP of the access network device. For another example, the first network device is an IAB node, and the third network device may also be a DU or a TRP of the IAB node. For another example, the first network device is a DU of an access network device, and the third network device is the access network device. For still another example, the first network device is an access network device, and the third network device is an IAB node.

In an example, the location of the at least one network device may be a location of at least one TRP of the network device.

In the foregoing implementation, the sensing configuration information of the at least one network device for executing the first sensing task may be obtained by the first network device from the second network device before S803.

The sensing capability information of the at least one network device may be obtained by the first network device from the second network device. The sensing capability information of the network device indicates the sensing capability information of the network device.

S804: The first network device sends second information to the third network device, where the second information is used for requesting the third network device to execute the first sensing task.

Optionally, the second information may carry a part or all of configuration information of the first network device, for example, carry a result reporting manner.

The second information may further carry at least one of the following: a location of the sensing target, an identifier of the sensing target, the sensing data of the first network device, and an identifier of a target device that receives and reports the sensing data.

Optionally, after the first network device switches the first sensing task to the third network device, the first network device or the third network device may further report to the second network device that the first sensing task has been switched to the third network device. The second network device may update an identifier of a routing node, for example, may update the routing node executing the first sensing task from an identifier of the first network device to an identifier of the third network device.

S805: The third network device executes the first sensing task.

In embodiments of this application, when determining that the sensing task needs to be switched to another network device, the first network device executing the sensing task switches the first sensing task to the another network device in a timely manner, so that interruption duration of the sensing task can be reduced, continuity of the sensing task can be improved, and performance of harmonized communication and sensing can be improved.

On the basis of a same technical concept as the method embodiments, an embodiment of this application provides a communication apparatus. A structure of the communication apparatus may be shown in FIG. 9, and the communication apparatus includes a processing module 901 and a communication module 902.

In an implementation, the communication apparatus may be specifically configured to implement the method performed by the first network device in the embodiment in FIG. 4. The apparatus may be the first network device, or may be a chip or a chip group in the first network device, or a part of a chip that is configured to perform a related method function. The processing module 901 is configured to execute a first sensing task, and determine that the first sensing task is to be switched. The communication module 902 is configured to send first information to a second network device, where the first information is used for requesting to switch the first sensing task to another network device, and the second network device is configured to manage a plurality of network devices including the first network device.

Optionally, when determining to switch the first sensing task, the processing module 901 is specifically configured to:
determine that a sensing target of the first sensing task moves, a moving distance of a sensing target of the first sensing task is greater than a threshold, a location that is after movement and that is of the sensing target of the first sensing task is outside a sensing range of the first network device, or a current location of the sensing target of the first sensing task is outside a sensing range of the first network device;
determine that sensing precision of the first network device is less than sensing precision corresponding to the first sensing task, or determining that sensing resolution of the first network device is less than sensing resolution corresponding to the first sensing task;
determine that a sensing resource of the first network device is less than a sensing resource corresponding to the first sensing task;
determine that an overlapping or conflicting resource exists between the sensing resource of the first network device and a communication resource of the first network device;
determine that a quantity of overlapping or conflicting resources between the sensing resource of the first network device and the communication resource of the first network device is greater than a threshold;
determine that a proportion of the overlapping or conflicting resource between the sensing resource of the first network device and the communication resource of the first network device to the sensing resource is greater than a preset threshold; and/or
determine that a data volume that can be currently carried by a first transmission channel is less than a data volume of sensing data, where the first transmission channel is used by the first network device to send data to the second network device.

Optionally, the communication module 902 is further configured to: send information about the sensing target of the first sensing task to the second network device.

In an implementation, the communication apparatus may be specifically configured to implement the method performed by the second network device in the embodiment in FIG. 4. The apparatus may be the second network device, or may be a chip or a chip group in the second network device, or a part of a chip that is configured to perform a related method function. The communication module 902 is configured to receive the first information sent by the first network device, and the first information is used for requesting to switch the first sensing task to another network device; and the processing module 901 is configured to: determine the third network device configured to execute the first sensing task, and switch the first sensing task to the third network device.

Optionally, when determining the third network device configured to execute the first sensing task, the processing module 901 is specifically configured to: determine the third network device based on at least one of the following: locations of the plurality of network devices, sensing capability information of the plurality of network devices, sensing data obtained by the first network device, the information about the sensing target of the first sensing task, and sensing configuration information of the plurality of network devices for executing the first sensing task.

Optionally, the communication module 902 is further configured to: receive the sensing data sent by the first network device and/or the information about the sensing target of the first sensing task.

Optionally, the communication module 902 is further configured to: receive sensing configuration information and/or sensing capability information of the plurality of network devices.

In an implementation, the communication apparatus may be specifically configured to implement the method performed by the first network device in the embodiment in FIG. 8. The apparatus may be the first network device, or may be a chip or a chip group in the first network device, or a part of a chip that is configured to perform a related method function. The processing module 901 is configured to: execute the first sensing task; determine that the first sensing task is to be switched; and determine the third network device configured to execute the first sensing task. The communication module 902 is configured to send second information to the third network device, and the second information is used for requesting the third network device to execute the first sensing task.

Optionally, when determining the third network device configured to execute the first sensing task, the processing module 901 is specifically configured to: determine the third network device based on a location of at least one network device and sensing configuration information of the at least one network device, where the at least one network device includes the third network device.

Optionally, when determining the second network device according to the location of the at least one network device and the sensing configuration information of the at least one network device, the processing module 901 is specifically configured to: determine the third network device based on at least one of the following: the sensing data, the information about the sensing target of the first sensing task, the location of at least one network device, the sensing configuration information of the at least one network device for executing the first sensing task, and sensing capability information of the at least one network device, where the at least one network device includes the third network device.

The communication module 902 is further configured to receive the sensing configuration information of at least one network device and/or the sensing capability information of the at least one network device sent by the third device.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related description in the method embodiments.

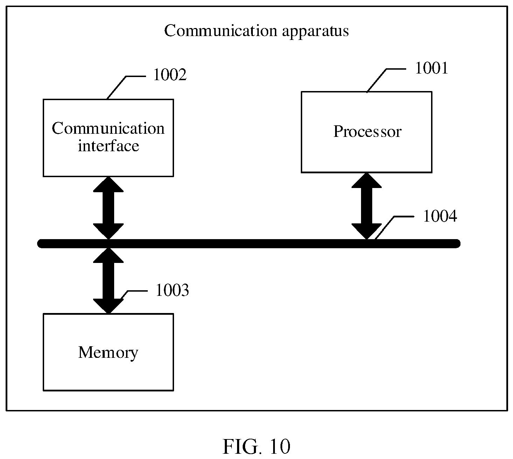

In a possible manner, a communication apparatus may be shown in FIG. 10. The apparatus may be a communication device or a chip in the communication device. The communication device may be the first network device in the foregoing embodiment, or may be the second network device in the foregoing embodiment. The apparatus includes a processor 1001 and a communication interface 1002, and may further include a memory 1003. The processing module 901 may be the processor 1001. The communication module 902 may be the communication interface 1002.

The processor 1001 may be a CPU, a digital processing unit, or the like. The communication interface 1002 may be a transceiver, an interface circuit like a transceiver circuit, a transceiver chip, or the like. The apparatus further includes the memory 1003, configured to store a program executed by the processor 1001. The memory 1003 may be a nonvolatile memory such as a hard disk drive (hard disk drive, HDD) or a solid-state drive (solid-state drive, SSD), or may be a volatile memory (volatile memory), for example, a random-access memory (random-access memory, RAM). The memory 1003 is any other medium that can be used to carry or store expected program code in a form of an instruction structure or a data structure and that can be accessed by a computer, but is not limited thereto.

The processor 1001 is configured to execute program code stored in the memory 1003, and is specifically configured to perform an action of the processing module 901. The communication interface 1002 is specifically configured to perform an action of the communication module 902. Details are not described herein again in this application. Details are not described herein again in this application.

In this embodiment of this application, a specific connection medium between the communication interface 1002, the processor 1001, and the memory 1003 is not limited. In this embodiment of this application, the communication interface 1002, the processor 1001, and the memory 1003 are connected through a bus 1004 in FIG. 10. The bus is represented by a bold line in FIG. 10. A manner of connection between other components is merely an example for description, and is not limited thereto. Buses may be classified into an address bus, a data bus, a control bus, and the like. For ease of representation, only one thick line is for representing the bus in FIG. 10, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system, including a communication apparatus configured to implement a function of the first network device in the embodiment in FIG. 4 and a communication apparatus configured to implement a function of the second network device in the embodiment in FIG. 4.

An embodiment of this application further provides a communication system, including a communication apparatus configured to implement a function of the first network device in the embodiment in FIG. 8 and a communication apparatus configured to implement a function of the third network device in the embodiment in FIG. 8.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method is applied to a first network device, and the method comprises:
executing a first sensing task;
determining that the first sensing task needs to be switched; and
sending first information to a second network device, wherein the first information is used for requesting to switch the first sensing task to another network device, and the second network device is configured to manage a plurality of network devices comprising the first network device.

2. The method according to claim 1, wherein the determining that the first sensing task is to be switched comprises:
determining that a sensing target of the first sensing task moves, a moving distance of a sensing target of the first sensing task is greater than a threshold, a location that is after movement and that is of the sensing target of the first sensing task is outside a sensing range of the first network device, or a current location of the sensing target of the first sensing task is outside a sensing range of the first network device;
determining that sensing precision of the first network device is less than sensing precision corresponding to the first sensing task, or determining that sensing resolution of the first network device is less than sensing resolution corresponding to the first sensing task;
determining that a sensing resource of the first network device is less than a sensing resource corresponding to the first sensing task;
determining that an overlapping or conflicting resource exists between the sensing resource of the first network device and a communication resource of the first network device;
determining that a proportion of the overlapping or conflicting resource between the sensing resource of the first network device and the communication resource of the first network device to the sensing resource is greater than a preset threshold;
determining that a quantity of overlapping or conflicting resources between the sensing resource of the first network device and the communication resource of the first network device is greater than a threshold; and/or
determining that a data volume that can be currently carried by a first transmission channel is less than a data volume of sensing data, wherein the first transmission channel is used by the first network device to send data to the second network device.

3. The method according to claim 1 or 2, wherein the first information indicates that a reason for switching the first sensing task is at least one of the following:
the sensing target of the first sensing task moves, the moving distance of the sensing target of the first sensing task is greater than the threshold, the location that is after movement and that is of the sensing target of the first sensing task is outside the sensing range of the first network device, or the current location of the sensing target of the first sensing task is outside the sensing range of the first network device;
the sensing precision of the first network device is less than the sensing precision corresponding to the first sensing task, or the sensing resolution of the first network device is less than the sensing resolution corresponding to the first sensing task;
the sensing resource of the first network device is less than the sensing resource corresponding to the first sensing task;
the overlapping or conflicting resource exists between the sensing resource of the first network device and the communication resource of the first network device;
the proportion of the overlapping or conflicting resource between the sensing resource of the first network device and the communication resource of the first network device to the sensing resource is greater than the preset threshold;
the quantity of overlapping or conflicting resources between the sensing resource of the first network device and the communication resource of the first network device is greater than the threshold; or
the data volume that can be currently carried by the first transmission channel is less than the data volume of the sensing data, wherein the first transmission channel is used by the first network device to send the data to the second network device.

4. The method according to any one of claims 1 to 3, wherein the first information carries sensing configuration information of the first network device that executes the first sensing task and/or the sensing data obtained by the first network device.

5. The method according to any one of claims 1 to 4, wherein the method further comprises:
sending information about the sensing target of the first sensing task to the second network device.

6. A communication method, wherein the method is applied to a second network device, the second network device is configured to manage a plurality of network devices, and the method comprises:
receiving first information sent by a first network device, wherein the first information is used for requesting to switch a first sensing task to another network device, and the plurality of network devices comprise the first network device;
determining a third network device configured to execute the first sensing task, wherein the plurality of network devices comprise the third network device; and
switching the first sensing task to the third network device.

7. The method according to claim 6, wherein the determining a third network device configured to execute the first sensing task comprises:
determining the third network device based on at least one of the following: locations of the plurality of network devices, sensing capability information of the plurality of network devices, sensing data obtained by the first network device, information about a sensing target of the first sensing task, and sensing configuration information of the plurality of network devices for executing the first sensing task.

8. The method according to claim 7, wherein a location of any network device in the plurality of network devices is a location of at least one transmission reception point of the any network device.

9. The method according to claim 7 or 8, wherein the method further comprises:
receiving the sensing data sent by the first network device and/or the information about the sensing target of the first sensing task.

10. The method according to any one of claims 7 to 9, wherein the method further comprises:
receiving the sensing configuration information of the plurality of network devices for executing the first sensing task and/or the sensing capability information of the plurality of network devices.

11. The method according to any one of claims 6 to 10, wherein the first information indicates that a reason for switching the first sensing task is at least one of the following:
the sensing target of the first sensing task moves, a moving distance of the sensing target of the first sensing task is greater than a threshold, a location that is after movement and that is of the sensing target of the first sensing task is outside a sensing range of the first network device, or a current location of the sensing target of the first sensing task is outside a sensing range of the first network device;
sensing precision of the first network device is less than sensing precision corresponding to the first sensing task, or sensing resolution of the first network device is less than sensing resolution corresponding to the first sensing task;
a sensing resource of the first network device is less than a sensing resource corresponding to the first sensing task;
an overlapping or conflicting resource exists between the sensing resource of the first network device and a communication resource of the first network device;
a proportion of the overlapping or conflicting resource between the sensing resource of the first network device and the communication resource of the first network device to the sensing resource is greater than a preset threshold;
a quantity of overlapping or conflicting resources between the sensing resource of the first network device and the communication resource of the first network device is greater than a threshold; and
a data volume that can be currently carried by a first transmission channel is less than a data volume of the sensing data, wherein the first transmission channel is used by the first network device to send data to the second network device.

12. The method according to any one of claims 6 to 11, wherein the first information carries sensing configuration information of the first network device that executes the first sensing task and/or the sensing data obtained by the first network device.

13. A communication method, wherein the method is applied to a first network device, and the method comprises:
executing a first sensing task;
determining that the first sensing task is to be switched;
determining a third network device configured to execute the first sensing task; and
sending second information to the third network device, wherein the second information is used for requesting the third network device to execute the first sensing task.

14. The method according to claim 13, wherein the determining that the first sensing task is to be switched comprises:
determining that a sensing target of the first sensing task moves;
determining that a moving distance of the sensing target of the first sensing task is greater than a threshold;
determining that a location that is after movement and that is of the sensing target of the first sensing task is outside a sensing range of the first network device; and/or
determining that a current location of the sensing target of the first sensing task is outside the sensing range of the first network device.

15. The method according to claim 13, wherein the determining that the first sensing task is to be switched comprises:
determining that sensing precision of the first network device is less than sensing precision corresponding to the first sensing task; and/or
determining that sensing resolution of the first network device is less than sensing resolution corresponding to the first sensing task.

16. The method according to claim 13, wherein the determining that the first sensing task is to be switched comprises:
determining that a sensing resource of the first network device is less than a sensing resource corresponding to the first sensing task.

17. The method according to claim 13, wherein the determining that the first sensing task is to be switched comprises:
determining that an overlapping or conflicting resource exists between a sensing resource of the first network device and a communication resource of the first network device.

18. The method according to claim 13, wherein the determining that the first sensing task is to be switched comprises:
determining that a proportion of an overlapping or conflicting resource between a sensing resource of the first network device and a communication resource of the first network device to the sensing resource is greater than a preset threshold.

19. The method according to claim 13, wherein the determining that the first sensing task is to be switched comprises:
determining that a quantity of overlapping or conflicting resources between a sensing resource of the first network device and a communication resource of the first network device is greater than a threshold.

20. The method according to claim 13, wherein the determining that the first sensing task is to be switched comprises:
determining that a data volume that can be currently carried by a first transmission channel is less than a data volume of sensing data, wherein the first transmission channel is used by the first network device to send data to a second network device.

21. The method according to any one of claims 13 to 20, wherein the determining a third network device configured to execute the first sensing task comprises:
determining the third network device based on at least one of the following: the sensing data, information about the sensing target of the first sensing task, a location of at least one network device, sensing configuration information of the at least one network device for executing the first sensing task, and sensing capability information of the at least one network device, wherein the at least one network device comprises the third network device.

22. The method according to claim 21, wherein a location of any network device in the at least one network device is a location of at least one transmission reception point of the network device.

23. The method according to claim 21 or 22, wherein before the determining a third network device configured to execute the first sensing task, the method further comprises:
receiving the sensing configuration information of the at least one network device for executing the first sensing task and/or the sensing capability information of the at least one network device.

24. The method according to any one of claims 21 to 23, wherein the information about the sensing target of the first sensing task comprises at least one of the following: identification information and location information of the sensing target of the first sensing task.

25. The method according to any one of claims 13 to 24, wherein the second information comprises at least one of the following: sensing configuration information of the first network device that executes the first sensing task, the information about the sensing target of the first sensing task, a sensing result reporting manner of the first sensing task, identification information of a target for receiving the sensing data, and the sensing data obtained by the first network device.

26. The method according to claim 25, wherein the information about the sensing target of the first sensing task comprises at least one of the following: the identification information and the location information of the sensing target of the first sensing task.

27. A communication apparatus, wherein the apparatus is used in a first network device, and the apparatus comprises:
a processing module, configured to: execute a first sensing task; and
determine that the first sensing task is to be switched; and
a communication module, configured to send first information to a second network device, wherein the first information is used for requesting to switch the first sensing task to another network device, and the second network device is configured to manage a plurality of network devices comprising the first network device.

28. The apparatus according to claim 27, wherein when determining to switch the first sensing task, the processing module is specifically configured to:
determine that a sensing target of the first sensing task moves, a moving distance of a sensing target of the first sensing task is greater than a threshold, a location that is after movement and that is of the sensing target of the first sensing task is outside a sensing range of the first network device, or a current location of the sensing target of the first sensing task is outside a sensing range of the first network device;
determine that sensing precision of the first network device is less than sensing precision corresponding to the first sensing task, or determine that sensing resolution of the first network device is less than sensing resolution corresponding to the first sensing task;
determine that a sensing resource of the first network device is less than a sensing resource corresponding to the first sensing task;
determine that an overlapping or conflicting resource exists between the sensing resource of the first network device and a communication resource of the first network device;
determine that a proportion of the overlapping or conflicting resource between the sensing resource of the first network device and the communication resource of the first network device to the sensing resource is greater than a preset threshold;
determine that a quantity of overlapping or conflicting resources between the sensing resource of the first network device and the communication resource of the first network device is greater than a threshold; and/or
determine that a data volume that can be currently carried by a first transmission channel is less than a data volume of sensing data, wherein the first transmission channel is used by the first network device to send data to the second network device.

29. The apparatus according to claim 27 or 28, wherein the first information indicates that a reason for switching the first sensing task is at least one of the following:
the sensing target of the first sensing task moves, the moving distance of the sensing target of the first sensing task is greater than the threshold, the location that is after movement and that is of the sensing target of the first sensing task is outside the sensing range of the first network device, or the current location of the sensing target of the first sensing task is outside the sensing range of the first network device;
the sensing precision of the first network device is less than the sensing precision corresponding to the first sensing task, or the sensing resolution of the first network device is less than the sensing resolution corresponding to the first sensing task;
the sensing resource of the first network device is less than the sensing resource corresponding to the first sensing task;
the overlapping or conflicting resource exists between the sensing resource of the first network device and the communication resource of the first network device;
the proportion of the overlapping or conflicting resource between the sensing resource of the first network device and the communication resource of the first network device to the sensing resource is greater than the preset threshold;
the quantity of overlapping or conflicting resources between the sensing resource of the first network device and the communication resource of the first network device is greater than the threshold; and
the data volume that can be currently carried by the first transmission channel is less than the data volume of the sensing data, wherein the first transmission channel is used by the first network device to send the data to the second network device.

30. The apparatus according to any one of claims 27 to 29, wherein the first information carries sensing configuration information of the first network device that executes the first sensing task and/or the sensing data obtained by the first network device.

31. The apparatus according to any one of claims 27 to 30, wherein the communication module is further configured to:
send information about the sensing target of the first sensing task to the second network device.

32. A communication apparatus, wherein the apparatus is used in a second network device, the second network device is configured to manage a plurality of network devices, and the apparatus comprises:
a communication module, configured to receive first information sent by a first network device, wherein the first information is used for requesting to switch a first sensing task to another network device, and the plurality of network devices comprise the first network device; and
a processing module, configured to: determine a third network device configured to execute the first sensing task, wherein the plurality of network devices comprise the third network device; and
switch the first sensing task to the third network device.

33. The apparatus according to claim 32, wherein when determining the third network device configured to execute the first sensing task, the processing module is specifically configured to:
determine the third network device based on at least one of the following: locations of the plurality of network devices, sensing capability information of the plurality of network devices, sensing data obtained by the first network device, information about a sensing target of the first sensing task, and sensing configuration information of the plurality of network devices for executing the first sensing task.

34. The apparatus according to claim 33, wherein a location of any network device in the plurality of network devices is a location of at least one transmission reception point of the any network device.

35. The apparatus according to claim 33 or 34, wherein the communication module is further configured to:
receive the sensing data sent by the first network device and/or the information about the sensing target of the first sensing task.

36. The apparatus according to any one of claims 33 to 35, wherein the communication module is further configured to:
receive the sensing configuration information of the plurality of network devices for executing the first sensing task and/or the sensing capability information of the plurality of network devices.

37. The apparatus according to any one of claims 32 to 36, wherein the first information indicates that a reason for switching the first sensing task is at least one of the following:
the sensing target of the first sensing task moves, a moving distance of the sensing target of the first sensing task is greater than a threshold, a location that is after movement and that is of the sensing target of the first sensing task is outside a sensing range of the first network device, or a current location of the sensing target of the first sensing task is outside a sensing range of the first network device;
sensing precision of the first network device is less than sensing precision corresponding to the first sensing task, or sensing resolution of the first network device is less than sensing resolution corresponding to the first sensing task;
a sensing resource of the first network device is less than a sensing resource corresponding to the first sensing task;
an overlapping or conflicting resource exists between the sensing resource of the first network device and a communication resource of the first network device;
a proportion of the overlapping or conflicting resource between the sensing resource of the first network device and the communication resource of the first network device to the sensing resource is greater than a preset threshold;
a quantity of overlapping or conflicting resources between the sensing resource of the first network device and the communication resource of the first network device is greater than a threshold; and
a data volume that can be currently carried by a first transmission channel is less than a data volume of the sensing data, wherein the first transmission channel is used by the first network device to send data to the second network device.

38. The apparatus according to any one of claims 32 to 37, wherein the first information carries sensing configuration information of the first network device that executes the first sensing task and/or the sensing data obtained by the first network device.

39. A communication apparatus, wherein the apparatus is used in a first network device, and the apparatus comprises:
a processing module, configured to: execute a first sensing task;
determine that the first sensing task is to be switched; and
determine a third network device configured to execute the first sensing task; and
a communication module, configured to send second information to the third network device, wherein the second information is used for requesting the third network device to execute the first sensing task.

40. The apparatus according to claim 39, wherein when determining that the first sensing task is to be switched, the processing module is specifically configured to:
determine that a sensing target of the first sensing task moves;
determine that a moving distance of the sensing target of the first sensing task is greater than a threshold;
determine that a location that is after movement and that is of the sensing target of the first sensing task is outside a sensing range of the first network device; and/or
determine that a current location of the sensing target of the first sensing task is outside the sensing range of the first network device.

41. The apparatus according to claim 39, wherein when determining that the first sensing task is to be switched, the processing module is specifically configured to:
determine that sensing precision of the first network device is less than sensing precision corresponding to the first sensing task; and/or
determine that sensing resolution of the first network device is less than sensing resolution corresponding to the first sensing task.

42. The apparatus according to claim 39, wherein when determining that the first sensing task is to be switched, the processing module is specifically configured to:
determine that a sensing resource of the first network device is less than a sensing resource corresponding to the first sensing task.

43. The apparatus according to claim 39, wherein when determining that the first sensing task is to be switched, the processing module is specifically configured to:
determine that an overlapping or conflicting resource exists between a sensing resource of the first network device and a communication resource of the first network device.

44. The apparatus according to claim 39, wherein when determining that the first sensing task is to be switched, the processing module is specifically configured to:
determine that a proportion of an overlapping or conflicting resource between a sensing resource of the first network device and a communication resource of the first network device to the sensing resource is greater than a preset threshold.

45. The apparatus according to claim 39, wherein when determining that the first sensing task is to be switched, the processing module is specifically configured to:
determine that a quantity of overlapping or conflicting resources between a sensing resource of the first network device and a communication resource of the first network device is greater than a threshold.

46. The apparatus according to claim 39, wherein when determining that the first sensing task is to be switched, the processing module is specifically configured to:
determine that a data volume that can be currently carried by a first transmission channel is less than a data volume of sensing data, wherein the first transmission channel is used by the first network device to send data to a second network device.

47. The apparatus according to any one of claims 39 to 46, wherein when determining the third network device configured to execute the first sensing task, the processing module is specifically configured to:
determine the third network device based on at least one of the following: the sensing data, information about the sensing target of the first sensing task, a location of at least one network device, sensing configuration information of the at least one network device for executing the first sensing task, and sensing capability information of the at least one network device, wherein the at least one network device comprises the third network device.

48. The apparatus according to claim 47, wherein a location of any network device in the at least one network device is a location of at least one transmission reception point of the network device.

49. The apparatus according to claim 47 or 48, wherein the communication module is further configured to:
before the processing module determines the third network device configured to execute the first sensing task, receive the sensing configuration information of the at least one network device for executing the first sensing task and/or the sensing capability information of the at least one network device.

50. The apparatus according to any one of claims 47 to 49, wherein the information about the sensing target of the first sensing task comprises at least one of the following: identification information and location information of the sensing target of the first sensing task.

51. The apparatus according to any one of claims 39 to 50, wherein the second information comprises at least one of the following: sensing configuration information of the first network device that executes the first sensing task, the information about the sensing target of the first sensing task, a sensing result reporting manner of the first sensing task, identification information of a target for receiving the sensing data, and the sensing data obtained by the first network device.

52. The apparatus according to claim 51, wherein the information about the sensing target of the first sensing task comprises at least one of the following: the identification information and the location information of the sensing target of the first sensing task.

53. A computer-readable storage medium, wherein the computer-readable storage medium is configured to store computer instructions; and when the computer instructions are run on a computer, the computer is enabled to perform the method according to any one of claims 1 to 5, the computer is enabled to perform the method according to any one of claims 6 to 12, or the computer is enabled to perform the method according to any one of claims 13 to 26.

54. A computer program product, wherein the computer program product comprises a computer program; and when the computer program is run on a computer, the computer is enabled to perform the method according to any one of claims 1 to 5, the computer is enabled to perform the method according to any one of claims 6 to 12, or the computer is enabled to perform the method according to any one of claims 13 to 26.
